# EUROPÄISCHE PATENTSCHRIFT

(11) **EP 4 182 984 B1**
(45) Veröffentlichungstag und Bekanntmachung des Hinweises auf die Patenterteilung: **24.04.2024**
(21) Anmeldenummer: 21746634.1
(22) Anmeldetag: 05.07.2021
(51) Int. Cl.: H01M 4/46, H01M 4/04, H01M 4/131, H01M 4/134, H01M 4/136, H01M 4/139, H01M 10/056

(54) **ANODE FÜR EINE MAGNESIUMBATTERIE SOWIE VERFAHREN ZUR HERSTELLUNG**
ANODE FOR A MAGNESIUM BATTERY AND METHOD FOR THE PRODUCTION THEREOF
ANODE POUR BATTERIE AU MAGNÉSIUM ET PROCÉDÉ POUR SA FABRICATION

(30) Priorität: 15.07.2020 DE 102020118666
(43) Veröffentlichungstag der Anmeldung: 24.05.2023
(73) Patentinhaber: Schaeffler Technologies AG & Co. KG, 91074 Herzogenaurach (DE)
(72) Erfinder: KAMPMANN, Felix, 76133 Karlsruhe (DE); REMMLINGER, Jürgen, 76227 Karlsruhe (DE); DOBRENIZKI, Ladislaus, 91315 Höchstadt (DE)
(86) Internationale Anmeldenummer: PCT/DE2021/100582
(87) Internationale Veröffentlichungsnummer: WO 2022/012715

(56) Entgegenhaltungen:
- JP-A- 2014 143 191
- TINA CHEN ET AL: "Evaluation of Mg compounds as coating materials in Mg batteries", ARXIV.ORG, CORNELL UNIVERSITY LIBRARY, 201 OLIN LIBRARY CORNELL UNIVERSITY ITHACA, NY 14853, 5. Februar 2019 (2019-02-05), XP081025765, DOI: 10.3389/FCHEM.2019.00024

## Beschreibung

Die Erfindung betrifft eine Anode für eine Magnesiumbatterie sowie ein Verfahren zur Herstellung einer Anode für eine Magnesiumbatterie. Unter einer Magnesiumbatterie ist ein elektrochemischer Speicher zu verstehen, dessen Anode im Wesentlichen aus Magnesium gebildet ist.

Aus der US 2020 / 0 112 028 A1 geht eine Anode für eine Magnesiumbatterie hervor. Die Anode ist aus einem Magnesiumschaum ausgebildet und weist eine Polymerschicht auf, die den Magnesiumschaum auf allen Oberflächen abdeckt.

Die US 2016 / 0 254 541 A1 beschreibt ein Elektrodenaktivmaterial für eine Magnesiumbatterie enthaltend eine λ-MnO₂-Phase.

Die US 2018 / 0 190 981 A1 offenbart eine Vorrichtung mit einer ersten Elektrode aus metallischem Magnesium und einer Beschichtung enthaltend ein erstes Polymer.

Die JP 2014 143 191 A (Abs. 28-35) beschreibt eine Magnesiumbatterie mit einer negativen Elektrode umfassend Magnesium, eine positive Elektrode aufweisend Kupfer oder eine Kupferlegierung und einen Elektrolyten umfassend Zitronensäure, Natriumchlorid und Wasser. Die der positiven Elektrode abgewandte Seite der negativen Elektrode ist mit einer Beschichtung umfassend Zinn beschichtet.

Allgemein ist bekannt, dass Magnesiumbatterien in der Regel aus mehreren Batteriezellen bestehen, wobei eine jeweilige Batteriezelle mehrere Anoden und Kathoden aufweist, die in einem Elektrolyten angeordnet sind. Im Betrieb der Magnesiumbatterie bildet sich zwischen dem Elektrolyten und der Magnesiumanode eine Grenzschicht auf der Magnesiumanode aus, die die Lebensdauer und Leistungsfähigkeit, insbesondere die Impedanz und Zyklenfestigkeit der Magnesiumbatterie verringert. Diese Grenzschicht kann sich bereits bei der Exposition der Magnesiumanode an Umgebungsluft bilden.

Die Aufgabe der Erfindung besteht darin, eine langlebige Anode für eine Magnesiumbatterie zu schaffen. Ferner soll die Anode günstig herzustellen sein und die Leistungsfähigkeit der Magnesiumbatterie steigern. Die Aufgabe wird gelöst durch den Gegenstand der Ansprüche 1 und 7. Bevorzugte Ausführungsformen sind den abhängigen Ansprüchen, der Beschreibung und den Figuren zu entnehmen.

Eine erfindungsgemäße Anode für eine Magnesiumbatterie weist ein Kernelement aus einem Kernmaterial auf, wobei an einer Oberfläche des Kernelements zumindest teilweise eine Magnesiumbeschichtung angeordnet ist, wobei an einer Oberfläche der Magnesiumbeschichtung eine Schutzschicht angeordnet ist, und wobei die Schutzschicht entweder
- metallisch ausgebildet ist und aus einem der nachfolgenden Elemente ausgebildet ist: Aluminium, Kupfer, Silizium, Titan, Tantal, Niob, Nickel, Molybdän, Silber, oder aus einer Legierung aus mindestens zwei der nachfolgenden Elemente besteht: Aluminium, Kupfer, Zinn, Silizium, Titan, Tantal, Niob, Nickel, Molybdän, Silber, oder
- keramisch ausgebildet ist und aus Elementen der Gruppe umfassend Aluminium, Kupfer, Zinn, Silizium, Titan, Tantal, Niob, Nickel, Molybdän, Silber, Kohlenstoff, Stickstoff, Sauerstoff, besteht, oder
- die Schutzschicht aus Metallsulfid besteht, wobei mindestens eines der nachfolgenden Elemente aus der Gruppe umfassend Aluminium, Kupfer, Zinn, Silizium, Titan, Tantal, Niob, Nickel, Molybdän, Silber, das Metallsulfid ausbildet, oder
- die Schutzschicht aus Kohlenstoff oder dotiertem Kohlenstoff besteht.

Mit anderen Worten ist zumindest ein Teil der Oberfläche des Kernelements oder die gesamte Oberfläche des Kernelements mit der Magnesiumbeschichtung beschichtet, wobei das Magnesium der Magnesiumbeschichtung vorzugsweise einen Reinheitsgrad von mindestens 99,9% aufweist. Die Magnesiumbeschichtung ist das Aktivmaterial der Anode. Das Aktivmaterial ist zur Wechselwirkung mit einer Kathode vorgesehen. An der Oberfläche der Magnesiumbeschichtung ist vollständig die Schutzschicht angeordnet. Die Schutzschicht ist insbesondere derart an der Oberfläche der Magnesiumbeschichtung ausgebildet, dass der Elektrolyt der Magnesiumbatterie entweder keinen direkten, also unmittelbaren Kontakt zu der Magnesiumbeschichtung der Anode aufweist, sondern lediglich die Schutzschicht, die an der Oberfläche der Magnesiumbeschichtung angeordnet ist, kontaktiert oder durch eine Interaktion mit der Magnesiumbeschichtung einen positiven Einfluss auf das Anodenverhalten aufweist. Dadurch ergibt sich der Vorteil, dass sich auf der Magnesiumbeschichtung keine spontane Grenzsicht zum Elektrolyten ausbildet, die die Lebensdauer und Leistungsfähigkeit, insbesondere die Impedanz und Zyklenfestigkeit der Magnesiumbatterie verringert. Insbesondere schützt die Schutzschicht die Magnesiumbeschichtung bei der Produktion vor Oxidation. Ferner ermöglicht die Schutzschicht eine Reduktion des Grenzflächenwiderstands sowie eine Verbesserung der Kinetik von Auflöse- und Abscheidevorgängen. Des Weiteren erfolgt mittels der Schutzschicht eine Optimierung der Zyklierbarkeit der Anode.

Um diese Vorteile zu erzielen, ist die Schutzschicht metallisch und aus vorzugsweise einem der nachfolgenden Elemente ausgebildet: Aluminium, Kupfer, Silizium, Titan, Tantal, Niob, Nickel, Molybdän, Silber. Alternativ ist die Schutzschicht aus einer Legierung von mindestens zwei der nachfolgenden Elemente ausgebildet: Aluminium, Kupfer, Zinn, Silizium, Titan, Tantal, Niob, Nickel, Molybdän, Silber.

Beispielsweise ist die Schutzschicht aus Aluminium oder einer Aluminiumlegierung ausgebildet. Beispielsweise ist die Schutzschicht aus Kupfer oder einer Kupferlegierung ausgebildet. Beispielsweise ist die Schutzschicht aus einer Zinnlegierung ausgebildet. Beispielsweise ist die Schutzschicht aus Silizium oder einer Siliziumlegierung ausgebildet. Beispielsweise ist die Schutzschicht aus Titan oder einer Titanlegierung ausgebildet. Beispielsweise ist die Schutzschicht aus Tantal oder einer Tantallegierung ausgebildet. Beispielsweise ist die Schutzschicht aus Niob oder einer Nioblegierung ausgebildet. Beispielsweise ist die Schutzschicht aus Nickel oder einer Nickellegierung ausgebildet. Beispielsweise ist die Schutzschicht aus Molybdän oder einer Molybdänlegierung ausgebildet. Beispielsweise ist die Schutzschicht aus Silber oder einer Silberlegierung ausgebildet.

In einer alternativen Ausführungsform ist die Schutzschicht keramisch ausgebildet und besteht aus Elementen der Gruppe umfassend Aluminium, Kupfer, Zinn, Silizium, Titan, Tantal, Niob, Nickel, Molybdän, Silber, Kohlenstoff, Stickstoff, Sauerstoff.

Insbesondere ist die keramische Schutzschicht eine Metalloxidschicht. Beispielsweise ist die Schutzschicht zumindest teilweise oder vollständig aus Aluminiumoxid ausgebildet. Beispielsweise ist die Schutzschicht zumindest teilweise oder vollständig aus Kupferoxid ausgebildet. Beispielsweise ist die Schutzschicht zumindest teilweise oder vollständig aus Zinnoxid ausgebildet. Beispielsweise ist die Schutzschicht zumindest teilweise oder vollständig aus Siliziumoxid ausgebildet. Beispielsweise ist die Schutzschicht zumindest teilweise oder vollständig aus Titanoxid ausgebildet. Beispielsweise ist die Schutzschicht zumindest teilweise oder vollständig aus Tantaloxid ausgebildet. Beispielsweise ist die Schutzschicht zumindest teilweise oder vollständig aus Nioboxid ausgebildet. Beispielsweise ist die Schutzschicht zumindest teilweise oder vollständig aus Nickeloxid ausgebildet. Beispielsweise ist die Schutzschicht zumindest teilweise oder vollständig aus Molybdänoxid ausgebildet. Beispielsweise ist die Schutzschicht zumindest teilweise oder vollständig aus Silberoxid ausgebildet.

In einer weiteren bevorzugten Ausführungsform ist die keramische Schutzschicht aus einer karbidischen und/oder nitridischen Verbindung gebildet. Beispielsweise ist die Schutzschicht zumindest teilweise oder vollständig aus Siliziumnitrid ausgebildet. Beispielsweise ist die Schutzschicht zumindest teilweise oder vollständig aus Titannitrid ausgebildet. Beispielsweise ist die Schutzschicht zumindest teilweise oder vollständig aus Niobnitrid ausgebildet. Beispielsweise ist die Schutzschicht zumindest teilweise oder vollständig aus Tantalnitrid ausgebildet.

In einer weiteren alternativen Ausführungsform besteht die Schutzschicht aus Metallsulfid besteht, wobei mindestens eines der nachfolgenden Elemente aus der Gruppe umfassend Aluminium, Kupfer, Zinn, Silizium, Titan, Tantal, Niob, Nickel, Molybdän, Silber, das Metallsulfid ausbildet. Beispielsweise ist die Schutzschicht zumindest teilweise oder vollständig aus Molybdänsulfid ausgebildet.

Gemäß einer weiteren bevorzugten Ausführungsform kann die Schutzschicht sulfidische und/oder nitridische Verbindungen aufweisen.

In einer weiteren alternativen Ausführungsform besteht die Schutzschicht aus Kohlenstoff oder dotiertem Kohlenstoff. Die Dotierung der dotierten Kohlenstoffschicht, also der größtenteils aus Kohlenstoff ausgebildeten Schutzschicht, beträgt maximal 45 Atom-%. Als Dotierungselement(e) werden hier bevorzugt ein oder mehrere Elemente aus der Gruppe umfassend Aluminium, Kupfer, Zinn, Silizium, Titan, Tantal, Niob, Nickel, Molybdän, Silber, Wasserstoff, verwendet.

Gemäß einer bevorzugten Ausführungsform der Erfindung weist die Schutzschicht eine Schichtdicke von mindestens 0,5 nm bis höchstens 5 µm auf. Insbesondere hat sich herausgestellt, dass eine Schichtdicke der Schutzschicht von mindestens 5 nm bis höchstens 250 nm besonders gut zur Erhaltung einer Energiedichte der Anode beiträgt.

Vorzugsweise ist das Kernelement, welches auch als Ableiter bekannt ist, zumindest teilweise aus Aluminium, Kupfer, Stahl oder einem Polymerwerkstoff ausgebildet. Beispielsweise ist das Kernelement aus Aluminium oder einer Aluminiumlegierung ausgebildet. Beispielsweise ist das Kernelement aus Kupfer oder einer Kupferlegierung ausgebildet. Beispielsweise ist das Kernelement aus Stahl oder einer Stahllegierung ausgebildet. Insbesondere ist die Stahllegierung ein Edelstahl, also ein Stahl, dessen Reinheitsgrad derart ist, dass ein Schwefel- und Phosphorgehalt höchstens 0,025 Gew.-% beträgt. Insbesondere ist die Stahllegierung korrosionsbeständig und weist zumindest Chrom und/oder Nickel als Legierungselemente auf. Die Legierungszusammensetzung der Stahllegierung lässt sich beispielsweise mittels Spektralanalyse (OES) oder mittels Röntgenfluoreszenzanalyse (RFA) bestimmen. Gew.-% ist die Abkürzung für Gewichtsprozent.

Zur Herstellung einer erfindungsgemäßen Anode werden folgende Verfahrensschritte durchgeführt: Zunächst wir ein Kernelement bereitgestellt. Das Kernelement ist bevorzugt aus einem Kernmaterial aus Aluminium, Kupfer, Stahl oder einem Polymerwerkstoff ausgebildet. Danach erfolgt das Aufbringen einer Magnesiumbeschichtung auf zumindest einem Teil einer Oberfläche des Kernelements. Anschließend erfolgt das Aufbringen einer Schutzschicht auf der Oberfläche der Magnesiumbeschichtung.

Gemäß einer bevorzugten Ausführungsform der Erfindung wird die Magnesiumbeschichtung durch ein galvanisches Verfahren, Laminationsverfahren, PVD-Verfahren, CVD-Verfahren, ALD-Verfahren, Plattierverfahren, thermische Spritzverfahren oder Schmelzverfahren auf zumindest einem Teil oder der gesamten Oberfläche des Kernelements aufgebracht.

Die Magnesiumbeschichtung weist bevorzugt eine Schichtdicke im Bereich von 50 nm bis 200 µm, insbesondere 1 µm bis 50 µm, auf.

Bei galvanischen Verfahren erfolgt die elektrochemische Abscheidung von Magnesium auf das Kernelement beispielsweise in einem elektrolytischen Bad. Bei Laminationsverfahren wird beschichtetes Material, beispielsweise die Magnesiumbeschichtung und die Schutzschicht auf ein strukturiertes Kernelement übertragen bzw. laminiert. Bei Plattierverfahren, auch Plattieren genannt, erfolgt das Ausbilden von Metalllagen auf das Substrat oder Kernelement durch Druck und Temperatur, insbesondere auch durch eine anschließende Wärmebehandlung. Bei thermischen Spritzverfahren wird verflüssigtes Magnesium auf das Substrat, also das Kernelement, gespritzt.

PVD ist die Abkürzung für den englischen Begriff "Physical Vapour Deposition". Bei dem PVD-Verfahren handelt es sich um einen Prozess, der unter Vakuum und bei Temperaturen zwischen 150°C und 500°C durchgeführt wird. Mithilfe physikalischer Verfahren wird das Ausgangsmaterial für die Magnesiumbeschichtung in die Gasphase überführt. Das gasförmige Material wird anschließend zu der Oberfläche des Kernelements geführt, wo es kondensiert und die Magnesiumbeschichtung bildet. Beispielsweise werden im PVD-Verfahren durch Sputtern Partikel aus einem Magnesiumtarget herausgelöst und in einem Plasma auf die Oberfläche des Kernelements transportiert. Mittels PVD-Verfahren können besonders reine und homogene Beschichtungen erzeugt werden.

CVD ist die Abkürzung für den englischen Begriff "Chemical Vapour Deposition". Bei dem CVD-Verfahren erfolgt die Schichtabscheidung an der erhitzten Oberfläche des Kernelements aufgrund einer chemischen Reaktion aus einer Gasphase. Das CVD-Verfahren zeichnet sich durch mindestens eine Reaktion an der Oberfläche des Kernelements aus. An dieser Reaktion sind mindestens eine gasförmige Ausgangsverbindung und mindestens zwei Reaktionsprodukte, wobei mindestens eines davon in der festen Phase vorliegt, beteiligt. Mittels CVD-Verfahren können besonders gleichmäßige Beschichtungen erzeugt werden.

ALD ist die Abkürzung für den englischen Begriff "Atomic Layer Deposition". Bei dem ALD-Verfahren handelt es sich um ein stark verändertes CVD-Verfahren mit mindestens zwei zyklisch durchgeführten selbstbegrenzenden Oberflächenreaktionen. Das abzuscheidende Material ist in chemischer Form an ein oder mehrere Trägergase gebunden. Die Trägergase werden abwechselnd in eine Reaktionskammer geleitet und dort zur Reaktion mit der Oberfläche des Kernelements gebracht, woraufhin das im Gas gebundene Magnesium sich auf der Oberfläche des Kernelements abscheidet. Mittels ALD-Verfahren können besonders dünne Beschichtungen erzeugt werden.

Bei dem Schmelzverfahren wird das Magnesium aufgeschmolzen und beispielsweise durch Tauchen oder Sprühen auf das Kernelement aufgebracht. Schmelzverfahren bieten nicht nur einen Kostenvorteil, sondern auch den Vorteil der Ausbildung einer schnellen sowie großflächigen Beschichtung.

Gemäß einer bevorzugten Ausführungsform der Erfindung wird die Schutzschicht durch ein PVD-Verfahren, CVD-Verfahren oder ALD-Verfahren auf der gesamten Oberfläche der Magnesiumbeschichtung aufgebracht.

Ferner besteht die Möglichkeit, die Schutzschicht auf eine Magnesiumfolie zu beschichten, die dann auf das Kernelement aufgebracht wird Die Magnesiumfolie wird vorzugsweise mit einem Walzverfahren hergestellt.

Gemäß einer bevorzugten Ausführungsform der Erfindung wird die Schutzschicht im Betrieb der Anode auf der Oberfläche der Magnesiumbeschichtung aufgebracht. Mit anderen Worten ist die Batteriezelle derart ausgebildet, dass während des Betriebs der Magnesiumbatterie eine Schutzschicht auf der Magnesiumbeschichtung der Anode erzeugt wird, die die Magnesiumbeschichtung vor Oxidation schützt, die Zyklierbarkeit der Anode optimiert, eine Reduktion des Grenzflächenwiderstands sowie eine Verbesserung der Kinetik von Auflöse- und Abscheidevorgängen ermöglicht. Beispielsweise ist dazu der Elektrolyt derart ausgebildet, dass eines der nachfolgenden Elemente als Schutzschicht auf die Magnesiumbeschichtung der Anode abgeschieden wird: Aluminium, Kupfer, Silizium, Titan, Tantal, Niob, Nickel, Molybdän, Silber. Alternativ wird eine Legierung aus mindestens zwei Elementen der Gruppe umfassend Aluminium, Kupfer, Zinn, Silizium, Titan, Tantal, Niob, Nickel, Molybdän, Silber, abgeschieden.

Ferner betrifft die Erfindung eine Magnesiumbatterie mit einer erfindungsgemäßen Anode. Insbesondere weist die Magnesiumbatterie eine Vielzahl von Batteriezellen auf, wobei jede Batteriezelle mehrere Anoden und Kathoden aufweist, die in einem Flüssigelektrolyten oder Festkörperelektrolyten angeordnet sind.

Als Kathode hat sich zusammen mit der erfindungsgemäßen Anode eine aus einem Kathodenmaterial enthaltend einen Schwefelanteil bewährt. Als Basismaterialien für eine Interkalationsreaktion haben sich zur Ausbildung der Kathode insbesondere V₂O₅ oder MgMn₂O₄ bewährt. Als Basismaterialien für eine Konversionsreaktion haben sich zur Ausbildung der Kathode insbesondere Schwefel-infiltrierter Kohlenstoff. SchwefelKohlenstoff-Komposite oder auch SPAN ( sulfurized poly(acrylonitrile) ) bewährt.

Zur Ausbildung eines Elektrolyten für die Magnesiumbatterie haben sich Elektrolytsalze bewährt wie

| | |
|---|---|
| MgTFSl₂ | Magnesium bis(trifluoromethanesulfonimide) |
| Mg(B(hfip)₄)₂ | Magnesium tetrakis(hexafluoroisopropyloxy) borate |
| Mg(BH₄)₂ | Magnesiumborhydrid |

Auch Mischungen von Mg(BH₄)₂ und Li(BH₄) ( = Lithiumborhydrid ) oder von Mg(B(hfip)₄)₂ und Li(B(hfip)₄) ( = Lithium tetrakis(hexafluoroisopropyloxy)borat ) haben sich als leistungssteigernd erwiesen.

Weiterhin hat sich der Einsatz von Mg(HMDS)₂ - basierten ( = Magnesium bis-(hexamethyldisilazide)-basierten ) Elektrolytsalzen bewährt.

Als Lösungsmittel zur Lösung der Elektrolytsalze habe sich Glyme, insbesondere TEG ( = Tetraethylene glycol dimethyl ether, Tetraglyme), DEG ( = Diethylene glycol dimethyl ether, Diglyme), DME ( = 1,2-Dimethoxyethan, Ethylene glycol dimethyl ether, Monoglyme), oder eine Mischung aus TEG und DME, bewährt.

Weiterhin bewährt als Lösungsmittel haben sich THF (Tetrahydrofuran) oder auch ionische Flüssigkeiten, wie bspw. Pyr₁₄TFSI ( = 1-Butyl-1-methylpyrrolidinium bis(trifluoromethylsulfonyl)imide ).

Weitere die Erfindung verbessernde Maßnahmen werden nachstehend gemeinsam mit der Beschreibung eines bevorzugten Ausführungsbeispiels der Erfindung anhand der beiden Figuren näher dargestellt, wobei gleiche Elemente mit dem gleichen Bezugszeichen versehen sind. Dabei zeigt
- Figur 1: eine stark vereinfachte schematische Schnittdarstellung einer nur teilweise dargestellten erfindungsgemäßen Magnesiumbatterie,
- Figur 2: eine stark vereinfachte schematische Schnittdarstellung einer nur teilweise dargestellten erfindungsgemäßen Anode.

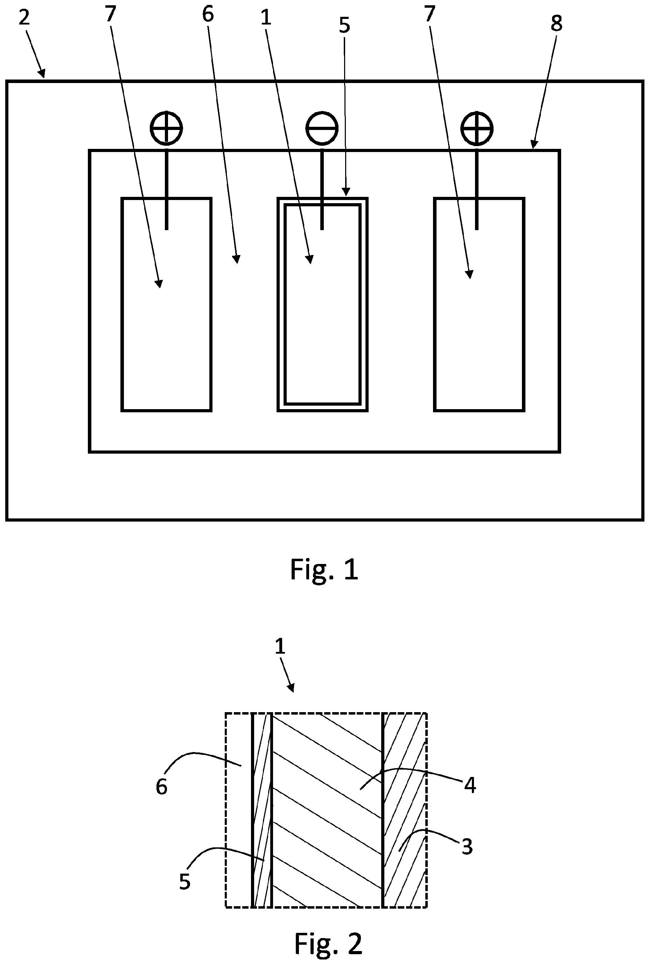

In Figur 1 ist eine erfindungsgemäße Magnesiumbatterie 2 stark vereinfacht dargestellt. Die Magnesiumbatterie 2 weist mehrere Batteriezellen 8 auf, wobei vorliegend zur Vereinfachung nur ein Teil einer einzigen Batteriezelle 8 dargestellt ist. Die Batteriezelle 8 weist mehrere Anoden 1 und Kathoden 7 auf, die in einem Elektrolyten 6 angeordnet sind. Eine Oberfläche der jeweiligen Anode 1 ist vollständig mit einer Schutzschicht 5 bedeckt.

Figur 2 zeigt einen Ausschnitt der Anode 1 gemäß Figur 1. Die Anode 1 weist ein Kernelement 3 auf, das vorliegend aus dem Kernmaterial Aluminium ausgebildet ist. An einer Oberfläche des Kernelements 3 ist eine Magnesiumbeschichtung 4 als Aktivmaterial der Anode 1 angeordnet, wobei die Magnesiumbeschichtung 4 beispielsweise im Schmelzverfahren ausgebildet wurde. An einer Oberfläche der Magnesiumbeschichtung 4 ist die Schutzschicht 5 angeordnet. Beispielsweise ist die Schutzschicht 5 metallisch aus Aluminium ausgebildet oder keramisch aus einem Kupferoxid ausgebildet. Insbesondere eignet sich das PVD-Verfahren zur Ausbildung der Schutzschicht 5. Die Schutzschicht 5 weist bevorzugt eine Schichtdicke von mindestens 0,5 nm bis höchstens 5 µm auf. Der Elektrolyt 6 grenzt nicht an der Magnesiumbeschichtung 4 an, sondern nur an der Schutzschicht 5. Dadurch wird die Langlebigkeit der Anode 1 erhöht und die Leistungsfähigkeit der Magnesiumbatterie 2 gesteigert.

### Bezugszeichenliste

- 1: Anode
- 2: Magnesiumbatterie
- 3: Kernelement
- 4: Magnesiumbeschichtung
- 5: Schutzschicht
- 6: Elektrolyt
- 7: Kathode
- 8: Batteriezelle

## Patentansprüche

1. Anode (1) für eine Magnesiumbatterie (2), aufweisend ein Kernelement (3) aus einem Kernmaterial, wobei an einer Oberfläche des Kernelements (3) zumindest teilweise eine Magnesiumbeschichtung (4) angeordnet ist, wobei an einer Oberfläche der Magnesiumbeschichtung (4) eine Schutzschicht (5) angeordnet ist,
**dadurch gekennzeichnet, dass** die Schutzschicht (5) entweder
- metallisch ausgebildet ist und aus einem der nachfolgenden Elemente besteht: Aluminium, Kupfer, Silizium, Titan, Tantal, Niob, Nickel, Molybdän, Silber, oder aus einer Legierung aus mindestens zwei der nachfolgenden Elemente besteht: Aluminium, Kupfer, Zinn, Silizium, Titan, Tantal, Niob, Nickel, Molybdän, Silber, oder
- keramisch ausgebildet ist und aus Elementen der Gruppe umfassend Aluminium, Kupfer, Zinn, Silizium, Titan, Tantal, Niob, Nickel, Molybdän, Silber, Kohlenstoff, Stickstoff, Sauerstoff, besteht, oder
- die Schutzschicht (5) aus Metallsulfid besteht, wobei mindestens eines der nachfolgenden Elemente aus der Gruppe umfassend Aluminium, Kupfer, Zinn, Silizium, Titan, Tantal, Niob, Nickel, Molybdän, Silber, das Metallsulfid ausbildet, oder
- die Schutzschicht (5) aus Kohlenstoff oder dotiertem Kohlenstoff besteht.

2. Anode (1) nach Anspruch 1,
**dadurch gekennzeichnet, dass** die keramische Schutzschicht (5) eine Metalloxidschicht ist.

3. Anode (1) nach Anspruch 1,
**dadurch gekennzeichnet, dass** die keramische Schutzschicht (5) aus einer karbidischen und/oder nitridischen Verbindung gebildet ist.

4. Anode (1) nach einem der vorhergehenden Ansprüche,
**dadurch gekennzeichnet, dass** die Schutzschicht (5) eine Schichtdicke von mindestens 0,5 nm bis höchstens 5 µm aufweist.

5. Anode (1) nach einem der vorhergehenden Ansprüche,
**dadurch gekennzeichnet, dass** die Magnesiumbeschichtung (4) eine Schichtdicke im Bereich von 50 nm bis 200 µm aufweist.

6. Anode (1) nach einem der vorhergehenden Ansprüche,
**dadurch gekennzeichnet, dass** das Kernmaterial aus mindestens einem Material der Gruppe umfassend Aluminium, Kupfer, Stahl,Polymerwerkstoff, ausgebildet ist.

7. Verfahren zur Herstellung einer Anode (1) nach einem der Ansprüche 1 bis 6, umfassend zumindest die Verfahrensschritte:
- Bereitstellen des Kernelements (3),
- Aufbringen der Magnesiumbeschichtung (4) auf zumindest einem Teil einer Oberfläche des Kernelements (3), und
- Aufbringen der Schutzschicht (5) auf die Oberfläche der Magnesiumbeschichtung (4).

8. Verfahren nach Anspruch 7,
**dadurch gekennzeichnet, dass** die Magnesiumbeschichtung (4) durch ein galvanisches Verfahren, Laminationsverfahren, PVD-Verfahren, CVD-Verfahren, ALD-Verfahren, Plattierverfahren, thermisches Spritzverfahren oder Schmelzverfahren auf zumindest einem Teil der Oberfläche des Kernelements (3) aufgebracht wird.

9. Verfahren nach Anspruch 7 oder 8,
**dadurch gekennzeichnet, dass** die Schutzschicht (5) durch ein galvanisches Verfahren, PVD-Verfahren, CVD-Verfahren, Plattierverfahren oder ALD-Verfahren auf der Oberfläche der Magnesiumbeschichtung (4) aufgebracht wird.

10. Magnesiumbatterie (2) mit mindestens einer Anode (1) nach einem der Ansprüche 1 bis 6 und mindestens einer Kathode (7) aus einem Kathodenmaterial enthaltend einen Schwefelanteil.

## Claims

1. An anode (1) for a magnesium battery (2), having a core element (3) made of a core material, wherein a magnesium coating (4) is at least partially arranged on a surface of the core element (3), wherein a protective layer (5) is arranged on a surface of the magnesium coating (4),
**characterised in that** the protective layer (5) either
- is metallic and consists of one of the following elements:
aluminium, copper, silicon, titanium, tantalum, niobium, nickel, molybdenum or silver, or an alloy of at least two of the following elements:
aluminium, copper, tin, silicon, titanium, tantalum, niobium, nickel, molybdenum or silver, or
- is ceramic and consists of elements from the group comprising aluminium, copper, tin, silicon, titanium, tantalum, niobium, nickel, molybdenum, silver, carbon, nitrogen and oxygen, or
- the protective layer (5) consists of metal sulphide, wherein at least one of the following elements from the group comprising aluminium, copper, tin, silicon, titanium, tantalum, niobium, nickel, molybdenum and silver, forms the metal sulphide, or
- the protective layer (5) consists of carbon or doped carbon.

2. The anode (1) according to claim 1,
**characterised in that** the ceramic protective layer (5) is a metal oxide layer.

3. The anode (1) according to claim 1,
**characterised in that** the ceramic protective layer (5) is formed from a carbide and/or nitride compound.

4. The anode (1) according to any one of the preceding claims,
**characterised in that** the protective layer (5) has a layer thickness of at least 0.5 nm to a maximum of 5 µm.

5. The anode (1) according to any one of the preceding claims,
**characterised in that** the magnesium coating (4) has a layer thickness in the range from 50 nm to 200 µm.

6. The anode (1) according to any one of the preceding claims,
**characterised in that** the core material is formed from at least one material from the group comprising aluminium, copper, steel and polymer material.

7. A method for producing an anode (1) according to any one of claims 1 to 6, comprising at least the following method steps:
- providing the core element (3),
- applying the magnesium coating (4) to at least part of a surface of the core element (3), and
- applying the protective layer (5) to the surface of the magnesium coating (4).

8. The method according to claim 7,
**characterised in that** the magnesium coating (4) is applied to at least part of the surface of the core element (3) by means of a galvanic process, a lamination process, a PVD process, a CVD process, an ALD process, a plating process, a thermal spraying process or a melting process.

9. The method according to claim 7 or 8,
**characterised in that** the protective layer (5) is applied to the surface of the magnesium coating (4) by means of a galvanic process, a PVD process, a CVD process, a plating process or an ALD process.

10. A magnesium battery (2) having at least one anode (1) according to any one of claims 1 to 6, and at least one cathode (7) made of a cathode material containing a sulphur content.

## Revendications

1. Anode (1) pour une batterie au magnésium (2), présentant un élément central (3) constitué d'un matériau central, un revêtement en magnésium (4) étant au moins partiellement disposé sur une surface de l'élément central (3), une couche protectrice (5) étant disposée sur une surface du revêtement en magnésium (4),
**caractérisée en ce que** la couche protectrice (5) est
- constituée en métal et de l'un des éléments suivants :
aluminium, cuivre, silicium, titane, tantale, niobium, nickel, molybdène, argent ou d'un alliage d'au moins deux des éléments suivants :
aluminium, cuivre, étain, silicium, titane, tantale, niobium, nickel, molybdène, argent ou
- constituée en céramique et d'éléments du groupe comprenant l'aluminium, le cuivre, l'étain, le silicium, le titane, le tantale, le niobium, le nickel, le molybdène, l'argent, le carbone, l'azote, l'oxygène ou
- la couche protectrice (5) est constituée de sulfure métallique, au moins un des éléments suivants du groupe comprenant l'aluminium, le cuivre, l'étain, le silicium, le titane, le tantale, le niobium, le nickel, le molybdène, l'argent, formant le sulfure métallique, ou
- la couche protectrice (5) est constituée de carbone ou de carbone dopé.

2. Anode (1) selon la revendication 1,
**caractérisée en ce que** la couche protectrice (5) en céramique est une couche d'oxyde métallique.

3. Anode (1) selon la revendication 1,
**caractérisée en ce que** la couche protectrice (5) en céramique est formée d'un composé de carbure et/ou de nitrure.

4. Anode (1) selon l'une des revendications précédentes,
**caractérisée en ce que** la couche de protection (5) présente une épaisseur de couche d'au moins 0,5 nm et de jusqu'à un maximum de 5 µm.

5. Anode (1) selon l'une des revendications précédentes,
**caractérisée en ce que** le revêtement en magnésium (4) présente une épaisseur de couche dans la plage de 50 nm à 200 µm.

6. Anode (1) selon l'une des revendications précédentes,
**caractérisée en ce que** le matériau central est formé d'au moins un matériau du groupe comprenant l'aluminium, le cuivre, l'acier et un matériau polymère.

7. Procédé de fabrication d'une anode (1) selon l'une des revendications 1 à 6, comprenant au moins les étapes de procédé :
- préparation de l'élément central (3),
- application du revêtement en magnésium (4) sur au moins une partie d'une surface de l'élément central (3), et
- application de la couche protectrice (5) sur la surface du revêtement en magnésium (4).

8. Procédé selon la revendication 7,
**caractérisé en ce que** le revêtement en magnésium (4) est appliqué sur au moins une partie de la surface de l'élément central (3) par un procédé galvanique, un procédé de stratification, un procédé PVD, un procédé CVD, un procédé ALD, un procédé de placage, un procédé de projection thermique ou un procédé de fusion.

9. Procédé selon la revendication 7 ou 8,
**caractérisé en ce que** la couche protectrice (5) est appliquée sur la surface du revêtement en magnésium (4) par un procédé galvanique, un procédé PVD, un procédé CVD, un procédé de placage ou un procédé ALD.

10. Batterie au magnésium (2) comportant au moins une anode (1) selon l'une des revendications 1 à 6 et au moins une cathode (7) constituée d'un matériau cathodique contenant une teneur en soufre.
